# EUROPEAN PATENT APPLICATION

(11) **EP 4 654 521 A1**
(43) Date of publication of application: **26.11.2025**
(21) Application number: 24752683.3
(22) Date of filing: 19.01.2024
(51) Int. Cl.: H04L 9/08

(54) **RANDOM ACCESS METHOD, TERMINAL, NETWORK DEVICE, AND COMMUNICATION SYSTEM**

(30) Priority: 10.02.2023 CN 202310145321
(71) Applicant: Huawei Technologies Co., Ltd., Shenzhen, Guangdong 518129 (CN)
(72) Inventor: GUO, Yanfei, Shenzhen, Guangdong 518129 (CN); CUI, Yang, Shenzhen, Guangdong 518129 (CN); WU, Yizhuang, Shenzhen, Guangdong 518129 (CN)
(74) Representative: Epping - Hermann - Fischer
(86) International application number: PCT/CN2024/073303
(87) International publication number: WO 2024/164826

(57) **Abstract**

This application relates to the field of wireless communication technologies, and discloses a random access method, a terminal, a network device, and a communication system. In this application, if the terminal is a first-type terminal, an RRC establishment cause may be determined in a random access procedure based on a network congestion status, and an uplink scheduling message including the RRC establishment cause is sent to the network device. If the terminal is a second-type terminal, in a random access procedure, an RRC establishment cause may be determined based on an access category of the terminal. The first-type terminal is a terminal allowed to initiate a priority service, and the second-type terminal is a terminal that is of a user and that is configured to be of a high-priority access class. According to the random access method provided in embodiments of this application, identity information of a high-priority user may not be disclosed, and user privacy can be protected.

## Description

### CROSS-REFERENCE TO RELATED APPLICATIONS

This application claims priority to Chinese Patent Application No. 202310145321.X, filed with the China National Intellectual Property Administration on February 10, 2023 and entitled "RANDOM ACCESS METHOD, TERMINAL, NETWORK DEVICE, AND COMMUNICATION SYSTEM", which is incorporated herein by reference in its entirety.

### TECHNICAL FIELD

This application relates to the field of wireless communication technologies, and in particular, to a random access method, a terminal, a network device, and a communication system.

### BACKGROUND

When a terminal accesses a communication network, a contention-based random access manner may be used. In a contention-based random access procedure, the terminal sends a radio resource control (radio resource control, RRC) setup request (setup request) message to a network device, where the RRCSetupRequest message carries identity information of the terminal and an RRC establishment cause (RRC establishment cause), and the RRC establishment cause may represent a priority of a user corresponding to the terminal. A high-priority user can be distinguished from a common user based on the RRC establishment cause.

The RRCSetupRequest message is usually sent in plain text through an air interface, and the plaintext RRC establishment cause can be easily intercepted by an attacker. As a result, identity information of the high-priority user is disclosed. Therefore, how to ensure that the identity information of the high-priority user is not disclosed in an RRC connection process is an urgent problem to be resolved.

### SUMMARY

Embodiments of this application provide a random access method, a terminal, a network device, and a communication system, to reduce user identity information disclosure and protect user privacy.

According to a first aspect, an embodiment of this application provides a random access method, which may be applied to a terminal. The random access method may include: if the terminal is a first-type terminal, determining a first RRC establishment cause in a random access procedure based on a network congestion status, and sending an uplink scheduling message including the first RRC establishment cause to a network device.

The first-type terminal is a terminal allowed to initiate a priority service.

According to the random access method provided in this embodiment of this application, the terminal that is of a high-priority user and that is allowed to initiate the priority service may determine the RRC establishment cause in the random access procedure based on the network congestion status. When a network is not in a congested state, the high-priority user cannot be distinguished from a common user based on the reported RRC establishment cause. Therefore, identity information of the high-priority user is not disclosed, and user privacy is protected.

In a possible implementation, if the terminal determines that a network is not in a congested state, the terminal may determine the first RRC establishment cause based on an access category of the terminal; or if the terminal determines that a network is in a congested state, the terminal may determine the first RRC establishment cause based on an access identity of the terminal, or determine the first RRC establishment cause based on an access identity and an access category that are of the terminal.

In the foregoing implementation, when the network is not in the congested state, the terminal determines the RRC establishment cause based on the access category, and the identity information of the high-priority user is not disclosed based on the reported RRC establishment cause. When the network is in the congested state, the terminal determines the RRC establishment cause based on the access identity, and the RRC establishment cause can indicate a high-priority identity of the user. Therefore, it can be ensured that the terminal preferentially accesses the network. This solution ensures that when the network is not in the congested state, the identity information of the high-priority user is not disclosed based on the RRC establishment cause, and ensures that when the network is in the congested state, the high-priority user can preferentially access the network.

In a possible implementation, after sending the uplink scheduling message including the first RRC establishment cause to the network device, if an RRC reject message sent by the network device is received, the terminal determines a second RRC establishment cause based on the access identity of the terminal, determines a second RRC establishment cause based on the access identity and the access category that are of the terminal, or determines a second RRC establishment cause based on the access category of the terminal. The terminal sends an uplink scheduling message including the second RRC establishment cause to the network device.

In the foregoing implementation, after receiving the RRC reject message, the terminal may resend an uplink scheduling message by using an RRC establishment cause that indicates a high-priority identity of the terminal, to ensure that the terminal has an opportunity to preferentially access the network.

In a possible implementation, before determining the first RRC establishment cause based on the network congestion status, the terminal may determine the network congestion status based on network congestion indication information in broadcast information of the network device.

In a possible implementation, if a random access policy preconfigured in the terminal is a security-first policy, the step of determining the first RRC establishment cause in the random access procedure based on the network congestion status is performed.

In the foregoing implementation, different random access policies are provided for the user to select, to improve flexibility and satisfy different requirements of different users.

In a possible implementation, if the terminal is a second-type terminal, a third RRC establishment cause is determined in a random access procedure based on the access category of the terminal, and an uplink scheduling message including the third RRC establishment cause is sent to the network device. The second-type terminal is a terminal configured to be of a high-priority access class high Priority Access Class.

In the foregoing implementation, for the second-type terminal, the terminal determines the RRC establishment cause based on the access category, so that the user privacy can be protected.

According to a second aspect, an embodiment of this application provides a random access method, which may be applied to a terminal, and the random access method may include: performing encryption on uplink scheduling information by using an encryption key in a random access procedure, to obtain encrypted uplink scheduling information, where the encryption key is determined based on a public key of a network device, a temporary public key of the network device, and a temporary private key of the terminal, the public key of the network device is obtained by the terminal in advance from the network device, the temporary public key of the network device is obtained by the terminal from the network device in the random access procedure, and the temporary private key of the terminal is generated by the terminal in the random access procedure; and
sending the encrypted uplink scheduling information and the temporary public key of the terminal to the network device, where the temporary public key of the terminal is generated by the terminal in the random access procedure.

According to the random access method provided in this embodiment of this application, the encryption is performed on the uplink scheduling information. During the encryption, in addition to the long-term public key of the network device, the temporary public key of the network device and the temporary private key of the terminal are also used. The temporary public key is difficult to be cracked, so that security of the uplink scheduling information can be improved, thereby helping protect user privacy.

In a possible implementation, the public key of the network device is preconfigured in the terminal; or the public key of the network device is obtained in the following manner: The terminal receives broadcast information of the network device, and determines the public key of the network device based on the broadcast information.

In a possible implementation, the temporary public key of the network device is obtained in the following manner: The terminal sends random access preamble information to the network device; and the terminal receives a random access response message fed back by the network device for the random access preamble information, and determines the temporary public key of the network device based on the random access response message.

According to a third aspect, an embodiment of this application provides a random access method, which may be applied to a network device, and the random access method may include:
receiving, in a random access procedure of a target terminal, encrypted uplink scheduling information and a temporary public key of the target terminal that are sent by the target terminal, where the encrypted uplink scheduling information is obtained by the target terminal by performing encryption on uplink scheduling information by using an encryption key, the encryption key is determined based on a public key of the network device, a temporary public key of the network device, and a temporary private key of the target terminal, the public key of the network device is obtained by the target terminal in advance from the network device, the temporary public key of the network device is obtained by the target terminal from the network device in the random access procedure, and the temporary public key and the temporary private key that are of the target terminal are generated by the target terminal in the random access procedure; and
determining a decryption key based on the temporary public key of the target terminal, a private key of the network device, and a temporary private key of the network device, and performing decryption on the encrypted uplink scheduling information by using the decryption key.

In a possible implementation, before receiving the encrypted uplink scheduling information and the temporary public key of the target terminal that are sent by the target terminal, the network device may further receive random access preamble information sent by the target terminal, generate the temporary public key of the network device and the temporary private key of the network device for the current random access procedure of the target terminal, and feed back a random access response message to the target terminal, where the random access response message carries the temporary public key of the network device.

According to a fourth aspect, an embodiment of this application provides a terminal, including a memory and a processor, where the memory stores a computer program, and the processor is configured to read and execute the computer program stored in the memory, to enable any method provided in the first aspect or the second aspect to be performed.

According to a fifth aspect, an embodiment of this application provides a network device, including a memory and a processor, where the memory stores a computer program, and the processor is configured to read and execute the computer program stored in the memory, to enable any method provided in the third aspect to be performed.

According to a sixth aspect, an embodiment of this application provides a communication system, including a network device and a plurality of terminals communicatively connected to the network device, where the network device is the network device provided in the fifth aspect, and the terminal is the terminal provided in the fourth aspect.

According to a seventh aspect, an embodiment of this application provides a computer-readable storage medium, where the computer-readable storage medium stores computer-executable instructions, and the computer-executable instructions are used for enabling a computer to perform any method provided in the first aspect or the second aspect.

According to an eighth aspect, an embodiment of this application provides a computer program product, including computer-executable instructions, where the computer-executable instructions are used for enabling a computer to perform any method provided in the first aspect or the second aspect.

For technical effects that can be achieved in any one of the third aspect to the eighth aspect, refer to descriptions of beneficial effects in the first aspect or the second aspect. Details are not described herein again.

### BRIEF DESCRIPTION OF DRAWINGS

FIG. 1 is a diagram of a communication system according to an embodiment of this application;
FIG. 2 is a diagram of interaction between a terminal and a network device in a random access procedure according to an embodiment of this application;
FIG. 3 is a diagram of interaction between a terminal and a network device in another random access procedure according to an embodiment of this application;
FIG. 4 is a diagram of interaction between a terminal and a network device in still another random access procedure according to an embodiment of this application;
FIG. 5 is a diagram of a structure of a terminal according to an embodiment of this application; and
FIG. 6 is a diagram of a structure of a network device according to an embodiment of this application.

### DESCRIPTION OF EMBODIMENTS

To make objectives, technical solutions, and advantages of embodiments of this application clearer, the following describes embodiments of this application in detail with reference to the accompanying drawings. Terms used in embodiments of this application are merely used to explain specific embodiments of this application, but are not intended to limit this application.

Before specific solutions provided in embodiments of this application are described, some terms in this application are explained and described, to facilitate understanding of a person skilled in the art, but not to limit the terms in this application.

In embodiments of this application, "a plurality of" means two or more. In view of this, in embodiments of this application, "a plurality of" may also be understood as "at least two". "At least one" may be understood as one or more, for example, one, two, or more. For example, including at least one means including one, two, or more, and there is no limitation on which is included. For example, if at least one of A, B, and C is included, A, B, C, A and B, A and C, B and C, or A, B, and C may be included. "And/or" describes an association relationship between associated objects and indicates that there are three relationships. For example, A and/or B may indicate the following three cases: Only A exists, both A and B exist, and only B exists. In addition, the character "/", unless otherwise specified, generally indicates that the associated objects are in an "or" relationship.

Unless there is a statement to the contrary, ordinal numbers such as "first" and "second" in embodiments of this application are used to distinguish between a plurality of objects, and are not intended to limit a sequence, a time sequence, priorities, or importance of the plurality of objects.

First, a communication system to which technical solutions provided in this application are applicable is described.

The technical solutions in embodiments of this application may be applied to various communication systems, for example, a long term evolution (long term evolution, LTE) system, a 5th generation (5th generation, 5G) communication system, a wireless-fidelity (wireless-fidelity, Wi-Fi) system, a new radio (new radio, NR) system, a system integrating a plurality of communication systems, a future evolved communication system, or another network system that can be used to provide a communication service. This is not limited herein.

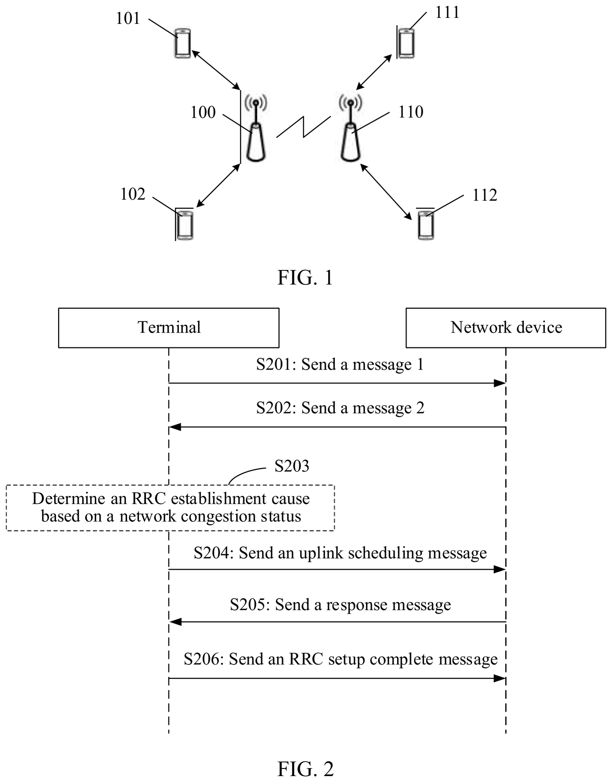

FIG. 1 is an example of a diagram of a structure of a possible communication system. The communication system includes at least one network device (where a network device 100 and a network device 110 are shown in the figure), and one or more terminals connected to the network device. As shown in FIG. 1, a terminal 101 and a terminal 102 communicate with the network device 100, and a terminal 111 and a terminal 112 communicate with the network device 110. It may be understood that the network device and the terminal may also be referred to as communication devices.

In embodiments of this application, the network device may be any device having a wireless transceiver function, and includes but is not limited to an evolved NodeB (NodeB, eNB, or e-NodeB, evolutional NodeB) in LTE, a gNodeB (gNodeB or gNB) or a transmission reception point (transmission receiving point/transmission reception point, TRP) in NR, an access node, a wireless relay node, a wireless backhaul node in a Wi-Fi system, and the like. A base station may be a macro base station, a micro base station, a pico base station, a small cell, a relay station, a balloon station, or the like. A plurality of base stations may support networks using a same technology mentioned above, or may support networks using different technologies mentioned above. The base station may include one or more co-site or non-co-site TRPs. The network device may alternatively be a radio controller, a CU, and/or a DU in a cloud radio access network (cloud radio access network, CRAN) scenario. The network device may alternatively be a server, a wearable device, an in-vehicle device, or the like. The following uses an example in which the network device is a base station for description. A plurality of network devices may be base stations of a same type, or may be base stations of different types. The base station may communicate with the terminal, or may communicate with the terminal via a relay station. The terminal may communicate with the plurality of base stations using different technologies. For example, the terminal may communicate with a base station supporting an LTE network, or may communicate with a base station supporting a 5G network, and may further support dual connectivity to a base station in an LTE network and a base station in a 5G network.

The terminal may be a user equipment (user equipment, UE), an access terminal, a subscriber unit, a subscriber station, a mobile station, a remote station, a remote terminal, a mobile device, a user terminal, a terminal, a wireless terminal, a user agent, or a user apparatus. The terminal may alternatively be a cellular phone, a cordless phone, a wireless local loop (wireless local loop, WLL) station, a personal digital assistant (personal digital assistant, PDA) device, a handheld device having a wireless communication function, a computing device, another processing device connected to a wireless modem, a mobile phone (mobile phone), a tablet computer (Pad), a computer having a wireless transceiver function, a virtual reality (virtual reality, VR) terminal, an augmented reality (augmented reality, AR) terminal, a wireless terminal in industrial control (industrial control), an in-vehicle terminal, a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a wearable terminal, a terminal in a future 5G network, a terminal in a future evolved PLMN, or the like. Alternatively, the terminal may be fixed or mobile, and the terminal may be deployed on land, in water, or in the air.

In some optional embodiments, a subscriber identity module (subscriber identity module, SIM) card interface is disposed in the terminal. A SIM card or a subscriber identity authentication module (user subscriber identification module, USIM) card of a user may be installed in the SIM card interface. Information such as an access class (Access class) of the terminal and whether to allow initiation of a high-priority service (multimedia priority service MPS or mission-critical service MCS) may be configured in the SIM card or the terminal. A specific access identity (Access identity) value of the terminal may be determined based on the configuration information.

The foregoing configuration information may be pre-configured in the terminal or the USIM of the user. Alternatively, in a process of accessing the network by the user or after the user accesses the network, an operator may send corresponding signaling via the network device, and may configure corresponding information in the terminal or the USIM of the user through the signaling.

For example, an access identity value of a 5G terminal is shown in the following table:

**Table 1**

| **Access identity value** | **Terminal configuration** |
|---|---|
| 0 | The terminal is not configured with any parameter from this table |
| 1 | The UE is configured for the multimedia priority service |
| 2 | The UE is configured for the mission-critical service |
| 3 | Terminal for which a disaster condition applies |
| 4-10 | Reserved for future use |
| 11 | An access class 11 is configured in the UE |
| 12 | An access class 12 is configured in the UE |
| 13 | An access class 13 is configured in the UE |
| 14 | An access class 14 is configured in the UE |
| 15 | An access class 15 is configured in the UE |

In addition, in embodiments of this application, the terminal may alternatively be a terminal in an internet of things (internet of things, IoT) system. The IoT is an important component of future information technology development, and a main technical feature of the IoT is connecting objects to a network by using a communication technology, to implement an intelligent network for human-machine interconnection and thing-thing interconnection. The terminal in embodiments of this application may alternatively be a terminal in machine type communication (machine type communication, MTC). The terminal in this application may alternatively be an in-vehicle module, an in-vehicle assembly, an in-vehicle component, an in-vehicle chip, or an in-vehicle unit that is disposed in a vehicle as one or more components or units. By using the in-vehicle module, the in-vehicle assembly, the in-vehicle component, the in-vehicle chip, or the in-vehicle unit that is disposed in the vehicle, the vehicle may implement the method in this application. Therefore, embodiments of this application may be applied to an internet of vehicles, for example, vehicle to everything (vehicle to everything, V2X), long term evolution-vehicle (long term evolution-vehicle, LTE-V), and vehicle-to-vehicle (vehicle-to-vehicle, V2V). An application scenario of the terminal is not limited in embodiments of this application. The following uses an example in which the network device is a base station and the terminal is a UE for description.

When the UE accesses a wireless communication network, uplink synchronization and downlink synchronization need to be established. The UE may obtain the downlink synchronization after a synchronization signal and PBCH block (synchronization signal and PBCH block, SSB) is successfully decoded. To establish the uplink synchronization and an RRC connection, the UE needs to perform a random access (random access, RA) process. The RA process is referred to as the random access procedure below. The random access procedure is classified into a contention-based random access (contention based random access, CBRA) manner and a contention-free random access (non-contention or contention free random access, CFRA) manner.

In the contention-free random access procedure, a random access preamble (preamble) of the UE is allocated by the base station, and this type of preamble may be referred to as a dedicated random access preamble (dedicated random access preamble) or a dedicated preamble. The base station may provide the dedicated preamble for the UE through RRC signaling or physical layer signaling, and there is no preamble contention in this process. When dedicated random access preamble resources are not abundant, the base station notifies the terminal to initiate contention-based random access.

In the contention-based random access, the UE randomly selects a preamble from a shared preamble pool. The preamble selected by the UE may be the same as a preamble selected by another UE. Therefore, a conflict or contention may occur in the random access procedure of the UE. The base station uses a contention resolution mechanism to process a random access request of the UE. In this process, the terminal sends an RRCSetupRequest message to the base station. The RRCSetupRequest message carries identity information of the terminal and an RRC establishment cause. The identity information of the terminal may be a temporary mobile subscription identity (for example, a 5G-S-TMSI) of the terminal or a random number. The RRC establishment cause may represent a priority of a user corresponding to the terminal. A high-priority user can be distinguished from a common user based on the RRC establishment cause.

In the contention-based random access, the RRCSetupRequest message is usually sent in plain text, and the plaintext RRC establishment cause can be easily intercepted by an attacker. The high-priority user can be easily distinguished from the common user based on the RRC establishment cause. As a result, the plaintext RRC establishment cause can easily disclose privacy information of the user, this information leakage allows the attacker to infer group membership of a high-priority user, a general location of a high-priority user (for example, by localizing the user to a specific cell), a quantity of high-priority users (for example, distinguished by different TMSIs), and a type of a high-priority user (for example, distinguished by establishment causes of different priorities).

In addition, the RRC establishment cause may alternatively be linked to another identifier that appears during a data session. For example, a temporary mobile subscriber identity (temporary mobile subscriber identity, TMSI) or a C-RNTI is sent in the RRCSetupRequest message that is the same as the RRC establishment cause. Consequently, the attacker may associate the RRC establishment cause with the TMSI or the C-RNTI, and trace the user during the entire data session until the terminal releases the connection.

To resolve the foregoing problem, an embodiment of this application provides a random access method. In the method, when a network is in a congested state, a terminal corresponding to a high-priority user sends a corresponding high-priority RRC establishment cause. When the network is not in the congested state, the terminal corresponding to the high-priority user may report an RRC establishment cause based on an access category. The terminal reports the corresponding high-priority RRC establishment cause only after RRC access is rejected.

FIG. 2 shows an interaction process between a terminal and a network device in a random access procedure. The terminal is the terminal corresponding to the high-priority user. During network entry and subscription, an operator provides two random access policies for the high-priority user. A 1^{st} random access policy is a security-first policy. In a case that the network is in the congested state or RRC establishment is rejected, a high-priority RRC establishment cause is reported. In another case, an RRC establishment cause is reported based on an access category (access category). A 2^{nd} random access policy is an access-first policy. In any case, the high-priority RRC establishment cause is reported. If the user attaches great importance to privacy, the user may select the 1^{st} random access policy. If the user considers that preferential access is more important, the user may select the 2^{nd} random access policy. The operator may configure, in a preconfiguration manner into a terminal or a USIM of the user, an access policy selected by the user; after the user selects an access policy, the operator sends corresponding signaling via a network device, and configures, through the signaling into a terminal or a USIM of the user, the access policy selected by the user; or a terminal may provide a corresponding network entry configuration option, and the user may select and configure an access policy on the terminal.

The terminal in FIG. 2 may be understood as a UE of the high-priority user, and the high-priority user selects the 1^{st} random access policy. A terminal of a high-priority user that selects the 2^{nd} random access policy may use an existing access procedure when performing contention-based random access. In a network contention mechanism, the high-priority user may preferentially access the network, and an access priority of a common user is lower than that of the high-priority user. For example, a high-priority user and a common user may be distinguished by using access identities (access identities). For example, a user whose access identity is 0, 11, 15, 12, 13, or 14 is a common user, and a user whose access identity is 1 or 2 is a high-priority user.

In the contention-based random access procedure, an interaction process between a first-type terminal that selects the 1^{st} random access policy and the network device is shown in FIG. 2. The first-type terminal is a terminal allowed to initiate a priority service, for example, a terminal of the high-priority user whose access identity is 1 or 2. The process may include the following steps.

In some embodiments, when accessing the network, the UE performs an access barring check. In this process, the UE may determine, based on barring control information (barring control information) in received broadcast system information (system information, SI) on a network side, whether the network is in the congested (overloaded) state. Specifically, the UE may check whether a MIB message in the SI includes cell barred status information (cell barred status information). The cell-barred status information may be understood as network congestion indication information. The UE may determine a congestion status of a current cell based on the network congestion indication information. If the barring control information is included, the network is in the congested state. If the barring control information is not included, the network is not in the congested state.

S201: The terminal sends a message 1 to the network device.

When accessing the network or restoring a network connection, the UE sends the message 1 (message 1, Msg1) to a base station. The message 1 is a random access preamble transmission (random access preamble transmission) message, and may be carried on a physical random access channel (physical random access channel, PRACH). The message 1 carries a random access preamble identifier (random access preamble identifier, RA-preamble identifier), and the RA-preamble identifier indicates a preamble randomly selected by the UE from a shared preamble pool.

S202: The network device sends a message 2 to the terminal.

The message 2 (message2, Msg2) is a response of the base station to the received message 1.

After obtaining the preamble of the UE, the base station may apply for a temporary cell-radio network temporary identity (temporary cell radio network temporary identity, TC-RNTI) and an uplink/downlink scheduling resource. Then, a random access response (random access response, RAR) packet is sent through a physical downlink shared channel (physical downlink shared channel, PDSCH). The RAR packet includes the random access preamble identifier (RA-preamble identifier), timing alignment (timing alignment) information, an initial uplink grant (initial uplink grant), and the TC-RNTI.

A message 2 may carry responses to message 1s of a plurality of UEs. For example, the base station may encapsulate responses to all message 1s detected on a random access opportunity together to form a message 2.

After sending the Msg1, the UE monitors a physical downlink control channel (physical downlink control channel, PDCCH), and waits for a RAR packet in a random access (random access, RA) response window. When an RA-preamble identifier included in the RAR packet received by the UE is the same as an RA-preamble identifier sent by the UE through the message 1, it indicates that the response is successful. If the terminal does not receive a response packet in the RA response window, or an RA-preamble identifier in a received response packet is different from the sent RA-preamble identifier, the response fails. If the response fails, the UE may re-initiate RA, and it may be determined that the RA fails until RA attempt times reach a specified quantity of times. The specified quantity of times may be 10.

S203: The terminal determines an RRC establishment cause based on a network congestion status.

In some embodiments, the terminal may determine the RRC establishment cause based on the network congestion status determined before step S201. In some other embodiments, after step S202, the terminal may then perform the step of determining, based on the broadcast system information of the network device, whether the network is in the congested state. For example, if the broadcast system information includes the barring control information, it indicates that the network is in the congested state. The barring control information is a type of network congestion indication information broadcast by the network device. When the network is in the congested state, the network device broadcasts the barring control information, to notify the terminal that the network is in the congested state and of types of an access identity and an access category that are blocked in this state. If types of an access identity and an access category of a UE correspond to those that are blocked in the barring control information, the UE does not send a random access request within specified duration.

If the terminal does not receive the barring control information broadcast by the network device, or the broadcast information received by the terminal does not include the barring control information, it indicates that the network is not in the congested state. In this case, as shown in Table 2, the terminal may determine the RRC establishment cause based on the access category.

**Table 2**

| Access category | RRC establishment cause |
|---|---|
| 0 (=MT_acc) | mt-Access |
| 1 (=delay tolerant) | Not applicable (NOTE 1) |
| 2 (=emergency) | emergency |
| 3 (=MO_sig) | mo-Signaling |
| 4 (=MO MMTel voice) | mo-VoiceCall |
| 5 (=MO MMTel video) | mo-VoiceCall |
| 6 (=MO SMS and SMSoIP) | mo-Data |
| 7 (=MO_data) | mo-Data |
| 9 (=MO_SMS registration related signaling) | mo-Data |
| 10 (=MO exception data) | mo-ExceptionData (NOTE 3) |

As shown in Table 2, corresponding RRC establishment causes are different based on different access categories. For example, when an access category is 0, a corresponding RRC establishment cause is mobile terminating access (mt-Access), and the access category 0 indicates mobile terminating access (MT_acc). When an access category is 1, a corresponding RRC establishment cause is Not applicable, and the access category 1 indicates delay tolerant (delay tolerant). When an access category is 2, a corresponding RRC establishment cause is emergency (emergency), and the access category 2 indicates emergency. When an access category is 3, a corresponding RRC establishment cause is mobile originating signal access (mo-Signaling), and the access category 3 indicates a mobile originating signal (MO_sig). When an access category is 4 or 5, a corresponding RRC establishment cause is mobile originating voice calling (mo-VoiceCall), the access category 4 indicates mobile originating telephone voice (MO MMTel voice), and the access category 5 indicates mobile originating telephone video (MO MMTel video). When an access category is 6, 7, or 9, a corresponding RRC establishment cause is mobile originating data access (mo-Data), the access category 6 indicates MO SMS and SMSoIP, the access category 7 indicates mobile originating data (MO_data), to be specific, there is uplink data for the terminal to send, and the access category 9 indicates MO_SMS registration related signaling. When an access category is 10, a corresponding RRC establishment cause is mobile originating exception data access (mo-ExceptionData), and the access category 10 indicates a mobile originating exception data (MO exception data).

It should be noted that, regardless of whether the network is in the congested state, terminals of a common user whose access identity is 0 and a high-priority access user whose access identity is 11, 12, 13, 14, or 15 may determine RRC establishment causes based on the access categories shown in Table 2.

If the terminal receives the barring control information broadcast by the network device, or the broadcast information received by the terminal includes the barring control information, it indicates that the network is in the congested state. In this case, as shown in Table 3, the high-priority access terminal may determine the RRC establishment cause based on the access identity, or the access identity and the access category.

**Table 3**

| Access identity | Access category | RRC establishment cause |
|---|---|---|
| 1 | Any category (any category) | mps-Priority Access |
| 2 | Any category (any category) | mcs-Priority Access |

As shown in Table 3, for a terminal corresponding to a user whose access identity is 1, regardless of an access category, an RRC establishment cause corresponding to the terminal is multimedia priority access (mps-Priority Access). For a terminal corresponding to a user whose access identity is 2, regardless of an access category, an RRC establishment cause corresponding to the terminal is mission-critical service priority access (mcs-Priority Access).

In conclusion, for the terminal of the high-priority user, if the network is not in the congested state, the terminal may determine the RRC establishment cause based on the access category. For example, if an access category of the terminal is 0, for example, in response to calling, the terminal may determine that the RRC establishment cause is mt-Access; if an access category of the terminal is 2, the terminal may determine that the RRC establishment cause is emergency; or if an access category of the terminal is 7, the terminal may determine that the RRC establishment cause is mo-Data. If the network is in the congested state, the terminal may determine the RRC establishment cause based on the access identity and the access category. For example, if an access identity of the terminal is 1, regardless of an access category, the terminal may determine that the RRC establishment cause is mps-Priority Access; or if an access identity of the terminal is 2, regardless of an access category, the terminal may determine that the RRC establishment cause is mcs-Priority Access.

S204: The terminal sends an uplink scheduling message to the network device.

The uplink scheduling message includes the RRC establishment cause determined in step S203. The terminal sends the uplink scheduling message through a physical uplink shared channel (physical uplink shared channel, PUSCH). The uplink scheduling message may be referred to as a message 3 (Msg3). In different RA scenarios, the terminal sends different uplink scheduling messages. For example, the RA scenarios may include a plurality of scenarios such as initial RRC connection establishment, RRC connection reestablishment, and cell handover.

In the initial RRC connection establishment, after determining the RRC establishment cause, the UE sends an RRCSetupRequest message to the network device, where transmission of the RRCSetupRequest message is performed at a radio link control (radio link control, RLC) layer through a common control channel (common control channel, CCCH). The RRCSetupRequest message carries the RRC establishment cause and a non-access stratum (non-access stratum, NAS) terminal identifier (UE_ID).

The RRC connection reestablishment refers to a scenario in which the UE resumes a suspended connection. In the RRC connection reestablishment, after determining the RRC establishment cause, the UE sends a radio resource control reestablishment request (RRC reestablishment request) message to the network device, where transmission of the RRC Reestablishment Request message is also performed at the RLC layer through the CCCH, and the RRC Reestablishment Request message carries the RRC establishment cause. In the RRC Reestablishment Request message, the RRC establishment cause may also be referred to as an RRC resume cause.

In a process of the cell handover, if the terminal accesses a target cell and no dedicated preamble is available during the handover, contention-based RA is triggered. After determining the RRC establishment cause, the UE sends a radio resource control handover confirm (RRC handover confirm) message to the network device, where the RRC Handover Confirm message carries the RRC establishment cause and a TC-RNTI, and transmission of the RRC Handover Confirm message may be performed through a dedicated control channel (dedicated control channel, DCCH). Based on an actual requirement, the terminal may further send a buffer status report (buffer status report, BSR) to the network device.

In another RA scenario, the uplink scheduling message performs transmission of at least the RRC establishment cause and the TC-RNTI.

S205: The network device sends a response message to the terminal.

The initial RRC connection establishment scenario is used as an example. The uplink scheduling message sent by the UE to the network device carries the access identity of the UE and the RRC establishment cause, to request the network device to allocate a specific radio link resource needed by the RRC connection. The network device receives the uplink scheduling message sent by the UE. If resources are abundant, the network device allocates a resource to the UE and establishes an SRB 1 bearer. The SRB1 is a bearer for control plane signaling data, and is used to carry all RRC signaling. Then, the network device sends an RRC setup response (RRC setup response) message to the UE. The RRC setup response message may also be referred to as a message 4 (Msg4), and is a contention resolution (contention resolution) message. The Msg4 may carry the TC-RNTI.

In another RA scenario, if resources on the network side are abundant, the network device may allocate resources to all UEs, and send RRC setup response messages to the UEs. This process may be performed with reference to the initial RRC connection establishment scenario, and is not described herein again.

S206: The terminal sends an RRC setup complete message to the network device.

In some embodiments, a UE may include a unique identifier of the UE in the Msg3, and the identity is a TC-RNTI or the identity is a UE identity (for example, an S-TMSI or a random number) from a core network. In a conflict resolution mechanism, the network device includes the unique identifier in the Msg4, to specify a UE that wins the contention. Another UE that does not win the contention is to re-initiate random access.

After sending the Msg3 to the network device, the terminal starts a contention resolution timer (mac-Contention Resolution Timer), and restarts the timer when HARQ (hybrid automatic repeat request) retransmission is performed on the Msg3. The UE keeps listening on the PDCCH until the timer expires or stops. If the UE obtains the PDCCH through listening and includes a C-RNTI MAC control element when sending the Msg3, the UE considers that the conflict resolution is successful in the following two cases. In other words, the UE successfully performs access. In this case, the UE stops the mac-ContentionResolutionTimer and discards the TC-RNTI.
(1) The random access procedure is triggered by using a MAC sublayer, the PDCCH received by the UE in the Msg4 is scrambled by using the C-RNTI carried in the Msg3, and an uplink resource is allocated to newly transmitted data.
(2) The random access procedure is triggered by using a PDCCH order, and the PDCCH received by the UE in the Msg4 is scrambled by using the C-RNTI carried in the Msg3.

If the Msg3 is sent through the CCCH and the PDCCH received in the Msg4 is scrambled by using the TC-RNTI specified in the RAR, the UE considers the random access successful and sets the C-RNTI to the TC-RNTI when a UE Contention Resolution Identity MAC control element included in a successfully decoded MAC PDU matches a CCCH service data unit (service data unit, SDU) sent in the Msg3.

If the mac-ContentionResolutionTimer expires, the UE discards the TC-RNTI and considers that the conflict resolution fails.

Simply put:
(1) If the UE is in an RRC_CONNECTED state originally, the UE has a unique identifier C-RNTI in a cell. The Msg3 brings the C-RNTI to the network device via the C-RNTI MAC control element. When sending the Msg4, if the UE wins the conflict resolution, the network device scrambles the PDCCH by using this C-RNTI. After receiving the PDCCH scrambled by using the C-RNTI, the UE learns that the access is successful.
(2) If the UE is not in an RRC_CONNECTED state originally, the UE does not have a C-RNTI in a cell. A unique identifier of the UE is from the core network (for example, an S-TMSI or a random number). The Msg3 is scrambled by using the TC-RNTI, and brings the unique identifier to the network device. When sending the Msg4, if the UE wins the conflict resolution, the network device sends information of the Msg3 back to the UE. The UE compares the Msg3 with the Msg4 and finds out that the Msg3 matches the Msg4. Then, the UE learns that the access is successful.

In other words, if the contention resolution timer expires, the terminal considers that the contention resolution fails. If the contention resolution fails and retry times does not reach a specified quantity of times, the terminal performs an RA operation again. If the RA attempt times reach an upper limit, the RA procedure fails.

Before the contention resolution timer expires, if the terminal receives the RRC setup response message sent by the network device and obtains the TC-RNTI carried in the RRC setup response message, the terminal sends the RRC setup complete (RRCsetup complete) message to the network device, and the RRC connection is successfully established.

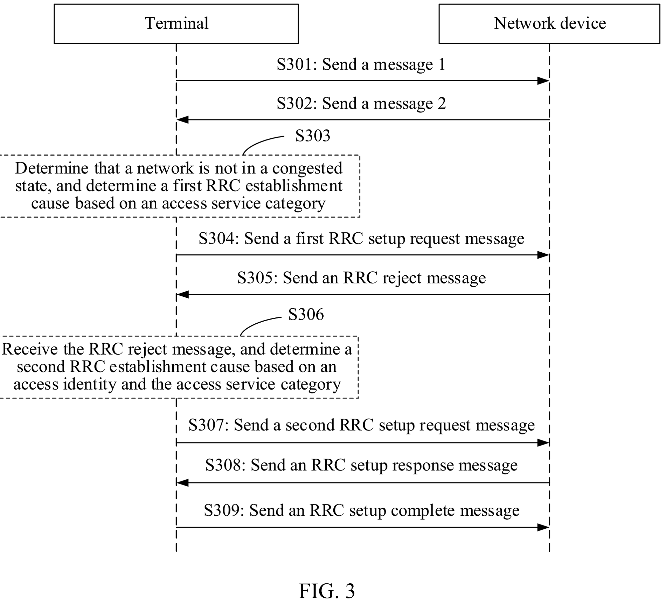

The following describes the random access procedure of the terminal with reference to a specific embodiment of an initial RRC connection establishment scenario. The terminal is a terminal of a high-priority user that selects a 1^{st} random access policy. The terminal of the high-priority user is a terminal allowed to initiate a priority service. In an optional embodiment, such a terminal is configured as a terminal that is allowed to initiate a high-priority service like an MPS or an MCS. For example, in a 5G system, an access identity of the terminal is 1 or 2. As shown in FIG. 3, the process may include the following steps.

S301: The terminal sends a message 1 to a network device.

S302: The network device sends a message 2 to the terminal.

S303: The terminal determines that a network is not in a congested state, and determines a first RRC establishment cause based on an access category.

For example, as shown in Table 2, if an access category of the terminal is 7, the terminal may determine that the first RRC establishment cause is mo-Data.

S304: The terminal sends a first RRC setup request message to the network device.

The first RRC setup request message carries an access identity of the terminal and the first RRC establishment cause mo-Data.

S305: The network device sends an RRC reject message to the terminal.

In this embodiment, if the network device has limited resources and cannot accept a current RRC setup request of the terminal, the network device may reject the access request of the terminal, and return the RRC reject (RRC reject) message to the terminal. For example, a base station returns the RRC reject message to the terminal through a CCCH.

In another embodiment, if the network device accepts, as resources allow, a current RRC setup request of the terminal, the network device may return an RRC setup response message to the terminal.

S306: The terminal receives the RRC reject message, and determines a second RRC establishment cause based on the access identity and the access category.

For example, if an access identity of the terminal is 1, regardless of an access category, the terminal may determine that the second RRC establishment cause is mps-Priority Access.

It should be noted that in some embodiments, when receiving the RRC reject message, the terminal may determine the second RRC establishment cause based on the access identity, or the access identity and the access category. In some other embodiments, when receiving the RRC reject message, the terminal may still determine the second RRC establishment cause based on the access category.

S307: The terminal sends a second RRC setup request message to the network device.

The second RRC setup request message carries the access identity of the terminal and the second RRC establishment cause mps-Priority Access. The RRC establishment cause mps-Priority Access represents that a corresponding user is a high-priority user.

S308: The network device sends an RRC setup response message to the terminal.

The network device preferentially processes an access request of the high-priority user, establishes a context for the terminal, allocates a corresponding SRB1 resource, and sends the RRC setup response message to the terminal.

S309: The terminal sends an RRC setup complete message to the network device.

In the foregoing embodiment, when the network is not in the congested state, a high-priority RRC establishment cause is not reported, so that privacy information of the high-priority user is not disclosed when the network is in a good state. This helps improve information security. In addition, in this embodiment of this application, different options are provided for a user, so that different users can flexibly select whether an access policy of the user is to preferentially ensure access or preferentially ensure privacy.

In a contention-based random access procedure, as shown in Table 4, when sending an uplink scheduling message to the network device, a terminal that is of a user and that is configured to be of a high-priority access class high Priority Access Class may determine, based on an access category, an RRC establishment cause that needs to be carried in the uplink scheduling message. In an optional embodiment, for example, in the 5G system, an access identity of this type of terminal may be 11, 15, 12, 13, or 14.

**Table 4**

| Access identity | Access category | RRC establishment cause |
|---|---|---|
| 11, 12, 13, 14, and 15 | 0 (=MT_acc) | mt-Access |
| | 1 (=delay tolerant) | Not applicable (NOTE 1) |
| | 2 (=emergency) | emergency |
| | 3 (=MO_sig) | mo-Signaling |
| | 4 (=MO MMTel voice) | mo-VoiceCall |
| | 5 (=MO MMTel video) | mo-VoiceCall |
| | 6 (=MO SMS and SMSoIP) | mo-Data |
| | 7 (=MO_data) | mo-Data |
| | 9 (=MO_SMS registration related signaling) | mo-Data |
| | 10 (=MO exception data) | mo-ExceptionData (NOTE 3) |

The RRC establishment causes corresponding to different access categories in Table 4 have been described above, and details are not described herein again.

In some other embodiments, in a contention-based random access procedure, a network device may include certificate information of the network device in broadcast information, and after receiving corresponding certificate information, a terminal of a user obtains public key information of the network device. Alternatively, public key information of the network device is preconfigured in a terminal of a user. The terminal sends, in the random access procedure, public key information in a generated temporary public-private key pair. The network device includes, in a random access response message, public key information in a temporary public-private key pair generated by the network device for the user. The terminal of the user and the network device determine a key based on the temporary public-private key pairs of the two parties and a long-term public-private key pair corresponding to a certificate of a base station, to encrypt and protect an RRC establishment process.

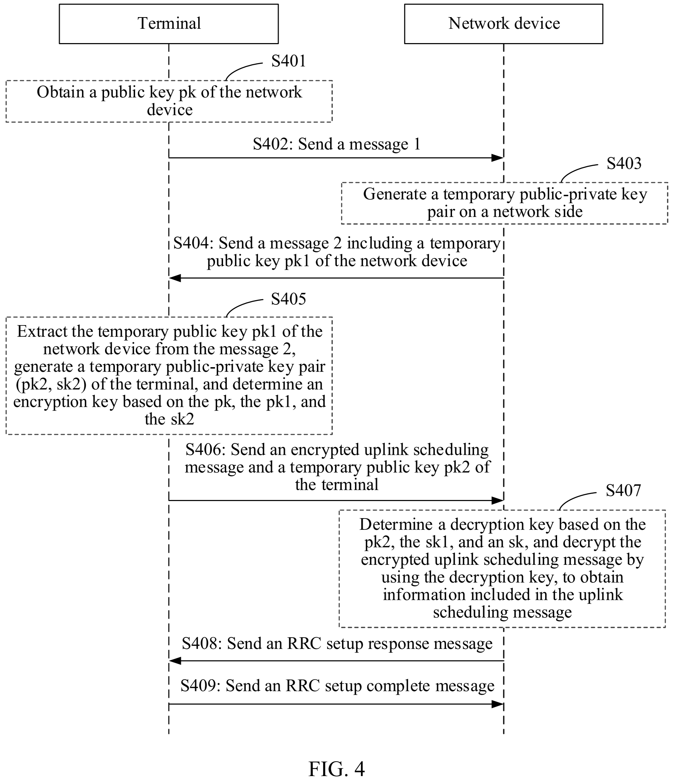

FIG. 4 shows an interaction process between a terminal and a network device in a random access procedure in this embodiment. The terminal is a terminal corresponding to a high-priority user. The interaction process may include the following steps.

S401: The terminal obtains a public key pk of the network device.

In some embodiments, a certificate is preconfigured in the network device, and the certificate includes a public-private key pair (pk, sk) of the network device, where the public-private key pair includes a public key pk and a private key sk that are of the network device. The network device may include the public key pk of the network device in a broadcast information. The terminal obtains the broadcast information from the network device through listening, and may extract the public key pk of the network device from the broadcast information.

In some other embodiments, a public key of the network device may be preconfigured in the terminal.

S402: The terminal sends a message 1 to the network device.

The message 1 herein is random access preamble information, and content carried in the message 1 and a function of the message 1 are the same as those of the message 1 in step S201. Details are not described herein again.

S403: The network device generates a temporary public-private key pair on a network side.

The network device receives the message 1 sent by the terminal, and generates the temporary public-private key pair (pk1, sk1) on the network side for the current random access procedure of the terminal, where the temporary public-private key pair (pk1, sk1) on the network side includes a temporary public key pk1 of the network device and a temporary private key sk1 of the network device, and the temporary public key pk1 of the network device and the temporary private key sk1 of the network device are used only in the current random access procedure of the terminal. In a next random access procedure, the network device generates a new temporary public-private key pair on the network side.

S404: The network device sends a message 2 including the temporary public key pk1 of the network device to the terminal.

The message 2 is a response of the network device to the received message 1, and may also be referred to as a random access response message. The random access response message carries the temporary public key pk1 of the network device, and is sent to the terminal.

S405: The terminal extracts the temporary public key pk1 of the network device from the message 2, generates a temporary public-private key pair (pk2, sk2) of the terminal, and determines an encryption key based on the public key pk of the network device, the temporary public key pk1 of the network device, and the temporary private key sk2 of the terminal.

The temporary public-private key pair of the terminal is used only in the current random access procedure. In a next random access procedure, the terminal generates a new temporary public-private key pair of the terminal.

S406: The terminal sends an encrypted uplink scheduling message and a temporary public key pk2 of the terminal to the network device.

For the terminal corresponding to the high-priority user, the terminal may determine an RRC establishment cause based on an access identity and an access category, to generate an uplink scheduling message including the RRC establishment cause; and the terminal may encrypt the uplink scheduling message by using an encryption key, to obtain the encrypted uplink scheduling message (which may also be referred to as a ciphertext C), and then send the encrypted uplink scheduling message and the temporary public key pk2 of the terminal to the network device.

S407: The network device determines a decryption key based on the pk2, the sk1, and the sk, and decrypts the encrypted uplink scheduling message by using the decryption key, to obtain information included in the uplink scheduling message.

After receiving the encrypted uplink scheduling message sent by the terminal, the network device may determine the decryption key based on the temporary public key pk2 of the terminal, the temporary private key sk1 of the network device, and the private key sk of the network device, and decrypt the encrypted uplink scheduling message by using the decryption key, to obtain the information included in the uplink scheduling message; and the network device determines that the uplink scheduling message is an RRCSetupRequest message, and obtains the RRC establishment cause in the uplink scheduling message.

S408: The network device sends an RRC setup response message to the terminal.

The RRC establishment cause in the uplink scheduling message indicates that the user corresponding to the terminal is a high-priority user. The network device preferentially processes an access request of the high-priority user, establishes a context for the terminal, allocates a corresponding SRB1 resource, and sends the RRC setup response message to the terminal.

S409: The terminal sends an RRC setup complete message to the network device.

In the foregoing embodiment, protection certificate information that needs to be used in the RRC establishment process is preconfigured in the network device, and the certificate information of the network device is carried in the broadcast information, so that the terminal can prestore public key information of the network device. In the random access procedure, the network device includes, in the random access response message, temporary public key information generated by the network device. The terminal includes, in an RRC setup request message, temporary public key information generated by the terminal, and determines an encryption key by using a long-term public key of the network device, the temporary private key of the terminal, and the temporary public key of the terminal, to protect the RRC setup request message. The network device determines an encryption key based on the private key corresponding to the certificate, the temporary private key generated by the network device, and the temporary public key of the terminal, to decrypt the RRC setup request message. In the foregoing random access procedure, the terminal and the network device send the temporary public keys, negotiate the corresponding encryption key, and encrypt content in the RRC setup request message, so that the RRC establishment cause of the user can be effectively protected, and user privacy disclosure can be prevented.

Based on a same technical concept as the foregoing embodiment, an embodiment of this application further provides a terminal. The terminal may be any terminal shown in FIG. 1. The terminal may be configured to implement functions in the foregoing method embodiments, and therefore can implement beneficial effects of the foregoing method embodiments.

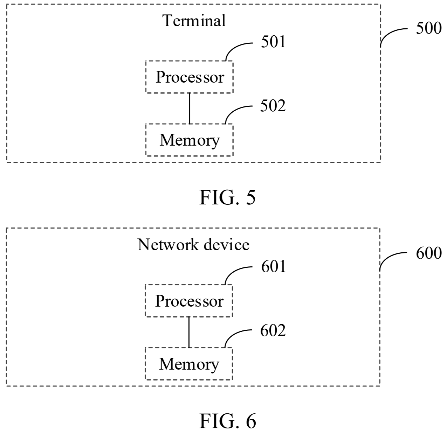

In some embodiments, a structure of the terminal 500 may be shown in FIG. 5, including a processor 501 and a memory 502 connected to the processor 501. The processor 501 and the memory 502 may be connected to each other through a bus. The processor 501 may be used as a main processor of the terminal 500, that is, a control core of the terminal 500. The bus may be a peripheral component interconnect (peripheral component interconnect, PCI) bus, an extended industry standard architecture (extended industry standard architecture, EISA) bus, or the like. Buses may be classified into an address bus, a data bus, a control bus, and the like. A specific connection medium between the processor 501 and the memory 502 is not limited in this embodiment of this application.

The memory 502 may include the foregoing internal memory. The memory 502 may be a volatile memory, for example, a random access memory. Alternatively, the memory may be a non-volatile memory, for example, a read-only memory ROM, a flash memory, a hard disk drive (hard disk drive, HDD), or a solid-state drive (solid-state drive, SSD), or the memory 502 is any other medium that can be used to carry or store expected program code in a form of instructions or a data structure and that can be accessed by a computer, but is not limited thereto. The memory 502 may be a combination of the foregoing memories. The memory 502 may be configured to store a software program and a module.

The processor 501 may include one or more processors. The processor 501 runs a software program and a module that are stored in the memory 502, to perform various functional applications of the terminal 500 and data processing, for example, the random access method provided in embodiments of this application.

It can be understood that the structure shown in this embodiment of this application does not constitute a specific limitation on the computing device. In some other embodiments of this application, the computing device may include more or fewer components than those shown in the figure, or some components may be combined, or some components may be divided, or there may be a different component arrangement. The components shown in the figure may be implemented by hardware, software, or a combination of software and hardware.

Based on a same technical concept as the foregoing embodiment, an embodiment of this application further provides a network device. The network device may be any network device shown in FIG. 1. The network device may be configured to implement functions in the foregoing method embodiments, and therefore can implement beneficial effects of the foregoing method embodiments.

In some embodiments, a structure of the network device 600 may be shown in FIG. 6, including a processor 601 and a memory 602 connected to the processor 601. The processor 601 and the memory 602 may be connected to each other through a bus. The processor 601 may be used as a main processor of the network device 600, that is, a control core of the network device 600. The bus may be a peripheral component interconnect (peripheral component interconnect, PCI) bus, an extended industry standard architecture (extended industry standard architecture, EISA) bus, or the like. Buses may be classified into an address bus, a data bus, a control bus, and the like. A specific connection medium between the processor 601 and the memory 602 is not limited in this embodiment of this application.

The memory 602 may include the foregoing internal memory. The memory 602 may be a volatile memory, for example, a random access memory. Alternatively, the memory may be a non-volatile memory, for example, a read-only memory ROM, a flash memory, a hard disk drive (hard disk drive, HDD), or a solid-state drive (solid-state drive, SSD), or the memory 602 is any other medium that can be used to carry or store expected program code in a form of instructions or a data structure and that can be accessed by a computer, but is not limited thereto. The memory 602 may be a combination of the foregoing memories. The memory 602 may be configured to store a software program and a module.

The processor 601 may include one or more processors. The processor 601 runs a software program and a module that are stored in the memory 602, to perform various functional applications of the network device 600 and data processing, for example, the random access method provided in embodiments of this application.

It can be understood that the structure shown in this embodiment of this application does not constitute a specific limitation on the computing device. In some other embodiments of this application, the computing device may include more or fewer components than those shown in the figure, or some components may be combined, or some components may be divided, or there may be a different component arrangement. The components shown in the figure may be implemented by hardware, software, or a combination of software and hardware.

An embodiment of this application further provides a communication system. As shown in FIG. 1, the communication system may include a network device and a plurality of terminals connected to the network device. A structure of the terminal is shown in FIG. 5, and a structure of the network device is shown in FIG. 6. Details are not described herein again.

The method steps in embodiments of this application may be implemented by hardware, or may be implemented by the processor by executing a computer program or instructions. The computer program or the instructions may constitute a computer program product. An embodiment of this application further provides a computer program product, including computer-executable instructions. In an embodiment, the computer-executable instructions are used to enable a computer to perform functions in the foregoing method embodiments.

The computer-executable instructions may be stored in a computer-readable storage medium. An embodiment of this application further provides a computer-readable storage medium, and the computer-readable storage medium stores executable instructions. In an embodiment, the computer-executable instructions are used to enable a computer to perform functions in the foregoing method embodiments.

The computer-readable storage medium provided in this embodiment of this application may be a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically ePROM, EEPROM), a register, a hard disk drive, a removable hard disk drive, a CD-ROM, or any other form of computer-readable storage medium well-known in the art.

The computer-executable instructions may be stored in the computer-readable storage medium, or may be transmitted from a computer-readable storage medium to another computer-readable storage medium. For example, a computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape, may be an optical medium, for example, a digital video disc (digital video disc, DVD), or may be a semiconductor medium, for example, a solid-state drive.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment. In addition, the terms "include", "have", and any variant thereof are intended to cover non-exclusive inclusion, for example, include a series of steps or units. For example, a method, system, product, or device is not necessarily limited to those steps or units expressly listed, but may include other steps or units not expressly listed or inherent to such a process, method, product, or device.

Although this application is described with reference to specific features and embodiments thereof, it is clear that various modifications and combinations may be made to them without departing from the spirit and scope of this application. Correspondingly, this specification and the accompanying drawings are merely example descriptions of solutions defined by the appended claims, and are considered as any or all of modifications, variations, combinations, or equivalents that fall within the scope of this application.

It is clear that a person skilled in the art can make various modifications and variations to this application without departing from the scope of this application. In this case, this application is intended to cover these modifications and variations of embodiments of this application provided that they fall within the scope of protection defined by the following claims and their equivalent technologies.

## Claims

1. A random access method, applied to a terminal, wherein the method comprises:
if the terminal is a first-type terminal, determining a first RRC establishment cause in a random access procedure based on a network congestion status; and
sending an uplink scheduling message comprising the first RRC establishment cause to a network device.

2. The method according to claim 1, wherein determining the first RRC establishment cause based on the network congestion status comprises:
determining, if a network is not in a congested state, the first RRC establishment cause based on an access category of the terminal; or
determining, if a network is in a congested state, the first RRC establishment cause based on an access identity of the terminal, or determining the first RRC establishment cause based on an access identity and an access category that are of the terminal.

3. The method according to claim 2, wherein after determining, if the network is not in the congested state, the first RRC establishment cause based on the access category of the terminal, and sending the uplink scheduling message comprising the first RRC establishment cause to the network device, the method further comprises:
if an RRC reject message sent by the network device is received, determining a second RRC establishment cause based on the access identity of the terminal, determining a second RRC establishment cause based on the access identity and the access category that are of the terminal, or determining a second RRC establishment cause based on the access category of the terminal; and
sending an uplink scheduling message comprising the second RRC establishment cause to the network device.

4. The method according to any one of claims 1 to 3, wherein before determining the first RRC establishment cause based on the network congestion status, the method further comprises:
determining the network congestion status based on network congestion indication information in broadcast information from the network device.

5. The method according to any one of claims 1 to 4, wherein determining the first RRC establishment cause in the random access procedure based on the network congestion status comprises:
if a random access policy preconfigured in the terminal is a security-first policy, performing the step of determining the first RRC establishment cause in the random access procedure based on the network congestion status.

6. The method according to any one of claims 1 to 5, wherein the first-type terminal is a terminal allowed to initiate a priority service.

7. The method according to any one of claims 1 to 6, wherein the method further comprises:
if the terminal is a second-type terminal, determining a third RRC establishment cause in a random access procedure based on the access category of the terminal, wherein the second-type terminal is a terminal configured to be of a high-priority access class; and
sending an uplink scheduling message comprising the third RRC establishment cause to the network device.

8. A random access method, applied to a terminal, wherein the method comprises:
performing encryption on uplink scheduling information by using an encryption key in a random access procedure, to obtain encrypted uplink scheduling information, wherein the encryption key is determined based on a public key of a network device, a temporary public key of the network device, and a temporary private key of the terminal, the public key of the network device is obtained by the terminal in advance from the network device, the temporary public key of the network device is obtained by the terminal from the network device in the random access procedure, and the temporary private key of the terminal is generated by the terminal in the random access procedure; and
sending the encrypted uplink scheduling information and a temporary public key of the terminal to the network device, wherein the temporary public key of the terminal is generated by the terminal in the random access procedure.

9. The method according to claim 8, wherein the public key of the network device is preconfigured in the terminal; or the public key of the network device is obtained in the following manner:
receiving broadcast information from the network device; and
determining the public key of the network device based on the broadcast information.

10. The method according to claim 8 or 9, wherein the temporary public key of the network device is obtained in the following manner:
sending random access preamble information to the network device; and
receiving a random access response message fed back by the network device for the random access preamble information, and determining the temporary public key of the network device based on the random access response message.

11. A random access method, applied to a network device, wherein the method comprises:
receiving, in a random access procedure of a target terminal, encrypted uplink scheduling information and a temporary public key of the target terminal that are sent by the target terminal, wherein the encrypted uplink scheduling information is obtained by the target terminal by performing encryption on uplink scheduling information by using an encryption key, the encryption key is determined based on a public key of the network device, a temporary public key of the network device, and a temporary private key of the target terminal, the public key of the network device is obtained by the target terminal in advance from the network device, the temporary public key of the network device is obtained by the target terminal from the network device in the random access procedure, and a temporary public key of the target terminal and the temporary private key of the target terminal are generated by the target terminal in the random access procedure; and
determining a decryption key based on the temporary public key of the target terminal, a private key of the network device, and a temporary private key of the network device, and performing decryption on the encrypted uplink scheduling information by using the decryption key.

12. The method according to claim 11, wherein before receiving the encrypted uplink scheduling information and the temporary public key of the target terminal that are sent by the target terminal, the method further comprises:
receiving random access preamble information sent by the target terminal;
generating the temporary public key of the network device and the temporary private key of the network device for the current random access procedure of the target terminal; and
feeding back a random access response message to the target terminal, wherein the random access response message carries the temporary public key of the network device.

13. A terminal, comprising a memory and a processor, wherein the memory stores a computer program, and the processor is configured to read and execute the computer program stored in the memory, to enable the method according to any one of claims 1 to 10 to be performed.

14. A network device, comprising a memory and a processor, wherein the memory stores a computer program, and the processor is configured to read and execute the computer program stored in the memory, to enable the method according to either of claims 11 and 12 to be performed.

15. A communication system, comprising a network device and a plurality of terminals communicatively connected to the network device, wherein the network device is the network device according to claim 14, and the terminal is the terminal according to claim 13.

16. A computer-readable storage medium, storing computer-executable instructions, wherein the computer-executable instructions are used for enabling a computer to perform the method according to any one of claims 1 to 12.

17. A computer program product, comprising computer-executable instructions, wherein the computer-executable instructions are used for enabling a computer to perform the method according to any one of claims 1 to 12.
